# EUROPÄISCHE PATENTSCHRIFT

(11) **EP 4 007 683 B1**
(45) Veröffentlichungstag und Bekanntmachung des Hinweises auf die Patenterteilung: **23.10.2024**
(21) Anmeldenummer: 20761135.1
(22) Anmeldetag: 31.07.2020
(51) Int. Cl.: B27D 3/02, B29C 70/54, B27M 1/04, B27M 1/02, B27M 3/00

(54) **BAUTEIL AUS EINEM WERKSTOFF, DER ÜBERWIEGEND AUS NACHWACHSENDEN ROHSTOFFEN BESTEHT, MIT MINDESTENS EINEM VERDICHTETEN BEREICH SOWIE VERFAHREN UND WERKZEUG ZUM HERSTELLEN DES VERDICHTETEN BEREICHES**
COMPONENT MADE FROM A MATERIAL CONSISTING PREDOMINANTLY OF RENEWABLE RAW MATERIALS, HAVING AT LEAST ONE COMPRESSED REGION, AND METHOD AND TOOL FOR PRODUCING THE COMPRESSED REGION
COMPOSANT RÉALISÉ À PARTIR D'UN MATÉRIAU COMPOSÉ PRINCIPALEMENT DE MATIÈRES PREMIÈRES RENOUVELABLES, AYANT AU MOINS UNE ZONE COMPRIMÉE, ET PROCÉDÉ ET OUTIL POUR PRODUIRE LA ZONE COMPRIMÉE

(30) Priorität: 01.08.2019 DE 202019104241 U
(43) Veröffentlichungstag der Anmeldung: 08.06.2022
(73) Patentinhaber: LiGenium GmbH, 09125 Chemnitz (DE)
(72) Erfinder: ALT, Christoph, 09113 Chemnitz (DE); PENNO, Eric, 09387 Jahnsdorf OT Leikersdorf (DE); EICHHORN, Sven, 04117 Leipzig (DE); ECKARDT, Ronny, 15834 Rangsdorf (DE)
(74) Vertreter: Rumrich, Gabriele
(86) Internationale Anmeldenummer: PCT/DE2020/100684
(87) Internationale Veröffentlichungsnummer: WO 2021/018354

(56) Entgegenhaltungen:
- EP-A2- 0 089 755
- DE-A1- 10 112 937
- DE-A1- 102017 006 050
- DE-U1- 202009 007 835
- JP-A- S6 342 819
- US-A- 4 248 820
- US-A- 6 019 153

## Beschreibung

Die Erfindung betrifft ein Bauteil aus einem Werkstoff, der überwiegend aus nachwachsenden Rohstoffen besteht, mit mindestens einem verdichteten Bereich sowie ein Verfahren und ein Werkzeug zum Herstellen des verdichteten Bereiches und findet insbesondere für dauerfeste Schraubverbindungen Anwendung.

Aus dem Stand der Technik ist der Einsatz von Nägeln und Schrauben als Verbindungsmittel sowie Bolzenverbindungen mit der Notwendigkeit des vorherigen Vorbohrens mit Werkzeugen mit geometrisch definierter Schneide bekannt. Bei Nagel und Schraube ist der Ausziehwiderstand zum größten Teil von der Rohdichte des Werkstoffes abhängig. Bei allen Verbindungsarten treten für die Verbindungsfestigkeit meist nachteilige Setzungserscheinungen, hauptsächlich im Holzwerkstoff auf. Für eine dauerfeste Verbindung für ein metallisches Verbindungsmittel ist ein hohes Anzugsmoment notwendig, was eine hohe Flächenpressung unter anderem unter Schraubenkopf/Mutter/Scheibe zur Folge hat. Dadurch wird die Spannung im Holzwerkstoff erhöht und die, für die Verbindungsfestigkeit nachteiligen Relaxations- und Retardationserscheinungen treten auf. Im Stand der Technik wird dieser Effekt durch die Vergrößerung der Auflagefläche, z.B. durch zusätzliche Elemente wie Unterlegscheiben oder durch den Einsatz von Inserts oder Hülsen im Bohrloch abgeschwächt.

In den Druckschriften DE 26 32 695 C2 und DE 76 23 015 U1 wird eine Ausgleichsbuchse für die Befestigung von Griffen oder dgl. beschrieben. Dabei sind zwischen Befestigungsgegenstand (z.B. Griff) und Unterlage (z.B. Holzplatte) konische Buchsen angeordnet. Die Unterlage weist eine Durchgangsbohrung im Bereich der Befestigungsstelle auf. Bei der Verschraubung des Griffs mit der Unterlage wird ein Einpressen der Buchsen in diese realisiert. Laut Beschreibung erfolgt dabei eine Verdrängung und somit eine Verdichtung und Verfestigung des Holzes. Weiterhin zentrieren sich die Bauteile zueinander, was zu einer präziseren Positionierung dieser zueinander führt. Durch diese Effekte erfolgt die Realisierung einer Verbindung, die in der Lage ist, hohe Radial-, Axial- und Kippkräfte aufzunehmen.

In DE 197 24 284 C2 ist eine Koppelpfette aus mehreren überlappend aneinander anschließenden Holzbalken sowie eine Schraube für eine Koppelpfette beschrieben. Bei dieser Erfindung kommen Schrauben zum Einsatz, die sich durch einen abgesetzten Schaft auszeichnen. Beide Bereiche sind mit Gewinde gleicher Steigung, jedoch unterschiedlichen Durchmessers, versehen. Die Gewinde haben dabei keine vorrangige schneidende, sondern eine verdrängende Funktion. Durch die abgestufte Gestaltung des Schraubenschafts erfolgt eine zweistufige Verfestigung des Werkstoffs und somit eine zusätzliche Erhöhung der Belastbarkeit der Verbindung. Ein weiterer positiver Effekt wird dadurch erzielt, dass der Schraubenkopf als relativ schlanker Kegel ausgebildet ist. Diese Gestaltung bewirkt, dass dieser leicht versenkbar ist, ohne dass ein zusätzlicher Arbeitsgang durch die Ausformung einer Senkung notwendig ist. Durch den Schraubenkopfkegel kommt es zu einer weiteren Werkstoffverfestigung. Im Schutzrecht wird ausgeführt, dass das Verbauen der Schrauben ohne Vorbohren möglich ist, ohne dass die Gefahr besteht, dass das Holz an seinen Enden aufreißt.

In DE 10 2016 120 728 A1 ist eine keglige Schraube für geschäumte Kunststoffe beschrieben. Hierbei handelt es sich um eine Verbindung in einem Kunststoff, mit einer definierten Elastizität. Das Schraubengewinde ist keglig ausgebildet. Es kommt beim Eindrehen des Gewindes nicht zur Zerstörung des Materials, sondern zu dessen Verdrängung und Komprimierung. Je tiefer das Gewinde eingeschraubt wird, desto größer wird der Durchmesser des Kegels und desto mehr Material wird verdrängt. Dies führt dazu, dass das Rückstellmoment, welches zum Eindrehen notwendig ist, ansteigt und somit auch die Anpresskraft, die sich zwischen den zu verbindenden Teilen ausbildet, ansteigt. Dadurch entsteht eine große Flächenpressung zwischen diesen, was zu einer belastbaren Verbindung führt.

In WO 2016 162 111 A1 ist eine reversible Verbindung zwischen Maschinenteilen beschrieben. Dabei wird ein fließfähiges Medium in einen Hohlraum eines Bauteils eingebracht und dieser wird verschlossen. Im Ausführungsbeispiel handelt es sich um eine Welle. In das fließfähige Medium erfolgt das Eindrehen eines kegligen Körpers, der dieses verdrängt. Somit bildet sich ein Druck im Hohlraum aus, der dazu führt, dass sich dieser erweitert, wodurch beispielsweise eine Welle-Nabe-Verbindung realisiert werden kann. Weiterer Stand der Technik ist bekannt aus US 4 248 820 A und DE 20 2009 007835 U.

Einige oben genannte Patentschriften hinsichtlich einer Verdichtung beziehen sich im Allgemeinen darauf, dass die Verdichtung der lokalen Stelle durch das Verbindungsmittel während des Anziehens des Verbindungsmittels verursacht wird. Die Verdichtungsgüte ist dadurch nur so groß, wie die maximale Vorspannkraft des Verbindungsmittels in Abhängigkeit der Schraubenkopffläche in Kombination der Druckfestigkeit des zu verdichtenden Werkstoffes möglich ist. Die maximal mögliche Verdichtung auf 1,4g/cm³ bei dessen Dichte der Werkstoff seine maximal möglichen mechanischen Eigenschaften aufweist ist im Regelfall nicht mit stiftförmigen Verbindungsmitteln und dessen resultierender Schraubenkopffläche realisierbar. Die Zugfestigkeit der Schraube ist bereits deutlich vor dem Erlangen der maximal möglichen Druckfestigkeit des Werkstoffes erschöpft. Retardations- bzw. Relaxationserscheinungen sind jedoch erst bei dieser Grenze nennenswert reduziert.

Bei der herkömmlichen Herstellung von Bohrungen in plattenförmigen Halbzeugen aus Holzwerkstoffen erfährt der Werkstoff eine spanende geometrische Formänderung. Nachteilig ist, dass die mechanischen Werkstoffeigenschaften im Bohrlochrandbereich des Werkstoffes gerade bezüglich der Dichteeigenschaften, sowie der Druckfestigkeit nicht bzw. so gering verändert werden, dass keine signifikante Relevanz besteht. Aufgabe der Erfindung ist es, ein Bauteil aus einem Werkstoff, der überwiegend aus nachwachsenden Rohstoffen besteht und mindestens einen verdichteten Bereich aufweist sowie ein Verfahren und Werkzeug zum Herstellen des verdichteten Bereiches zu entwickeln, welches eine lokale Erhöhung der Werkstoffdichte und damit der mechanischen Eigenschaften ohne die Notwendigkeit der Einbringung eines zusätzlichen Verbindungsmittels wie zum Beispiel von Inserts oder Hülsen mit höherer Dichte oder Festigkeit als der ursprüngliche Holzwerkstoff ermöglicht.

Diese Aufgabe wird mit den Merkmalen des ersten, dritten und neunten Patentanspruchs gelöst. Vorteilhafte Ausgestaltungen ergeben sich aus den Unteransprüchen.

Das Bauteil besteht dabei aus einem Werkstoff, der überwiegend aus nachwachsenden Rohstoffen gebildet wird, wobei das das Bauteil wenigstens ein Loch mit einer Längsachse aufweist und erfindungsgemäß der Werkstoff des Bauteils in dem sich an das Loch umfangsseitig anschließenden Bereich eine lokale Verdichtung aufweist. Durch die lokale Verdichtung werden Setzerscheinungen, die bei Herstellen einer Schraubverbindung mit einem anderen Bauteil auftreten, reduziert.

Der sich an das Loch umfangsseitig anschließende Bereich des Bauteils weist radiale und/oder axiale lokale Verdichtungen auf.

Das Bauteil kann bei der axialen Verdichtung im Vorfeld radial verdichtet sein. Somit ergäbe sich eine kombinierte Verdichtung von 1. Radial und 2. Axial. Somit wäre die Lochaussparung im Vorfeld zur axialen Verdichtung eingebracht.

Die 2. Variante wäre eine axiale Verdichtung und im Nachgang dazu eine Bohrung (spanend) umzusetzen.

Damit wäre die Verdichtung keine Kombination, sondern lediglich eine Einstufige Verdichtung mit der anschließenden Schraubenaussparung im spanenden Prozess zu unterziehen.

Wenn das Loch einen Durchmesser aufweist, beträgt der sich an das Loch umfangsseitig anschließende Umfang des verdichteten Bereiches bis zum fünffachen des Durchmessers des Lochs.

Die Höhe des verdichteten Bereiches beträgt bis zum zwanzigfachen des Lochdurchmessers und ist vorzugsweise im Vergleich zur Höhe des Bauteils des reduziert.

Das im Bauteil vorhandene Loch ist ein zylindrisches oder nahezu zylindrisches Loch und als Durchgangsloch in dem Bauteil ausgebildet ist oder weist einen Boden auf.

Der Werkstoff des Bauteils besteht aus Holz oder weist mindestens 50% Anteil an nachwachsenden Rohstoffen auf.

Besonders bevorzugt ist der der Werkstoff ein Holzwerkstoff, dem bedarfsweise weniger als 50% Anteile an anderen nachwachsenden Rohstoffen wie Graswerkstoffe (Bambus), beigefügt sind,

Das Bauteil kann auch ein Hybridwerkstoff wie Wood Plastic Composite (WPC) mit nachwachsenden Rohstoffen sein.

Weiterhin kann das Bauteil eine oder mehrere Materialschichten aus Metall, Kunststoff, Faserverbundmaterial, Papier oder Pappe oder einer Kombination dieser Materialschichten aufweisen.

Das Bauteil ist bevorzugt in Form einer Platte ausgebildet und weist mindestens zwei Lagen mit nachwachsenden Rohstoffen, bevorzugt drei Holzlagen auf, die bedarfsweise mit weiteren Materialschichten kombiniert sein können.

Das Loch wird bevorzugt in einem Winkel von 90° bis 45° zur Oberseite des Bauteils in das Bauteil eingebracht.

Das Verfahren zum Herstellen mindestens eines verdichteten Bereiches in einem Bauteil aus einem Werkstoff, der zu mindestens 50% aus nachwachsenden Rohstoffen besteht, erfolgt dadurch, dass mindestens ein rotierender Dorn in den Werkstoff des Bauteils eindringt und dadurch ein Loch im Bauteil erzeugt und den Werkstoff radial und/oder axial verdrängt und dabei in dem das Loch umgebenden Bereich des Werkstoffs eine lokale Verdichtung (V) erzeugt.

Alternativ erfolgt das Verfahren zum Herstellen mindestens eines verdichteten Bereiches in einem Bauteil aus einem Werkstoff, der zu mindestens 50% aus nachwachsenden Rohstoffen besteht, dadurch, dass mindestens ein rotierender Dorn in den Werkstoff des Bauteils eindringt und dadurch eine Vertiefung im Bauteil erzeugt und den Werkstoff radial und/oder axial verdrängt und dabei in dem Werkstoff eine lokale Verdichtung (V) erzeugt.

Gemäß einer Ausgestaltung der Erfindung können zwei sich gegenüberliegende Dorne Anwendung finden, die wechselseitig aus sich gegenüberliegenden Richtungen in das Bauteil eindringen und das Loch mit dem Durchmesser erzeugen und dabei den Werkstoff verdrängen und in dem das Loch umgebenden Bereich verdichten.

Alternativ können zwei sich gegenüberliegende Dorne Anwendung finden und aus sich gegenüberliegenden Richtungen eine Vertiefung im Bauteil erzeugen und den zwischen den Dornen befindlichen Bereich des Bauteils verdichten. Der wenigstens eine Dorn oder die sich gegenüberliegenden Dorne rotieren zumindest während des Eindringens in das Bauteil.

Es kann nach dem teilweisen Eindringen eines Dorns in das Bauteil eine Rückhubbewegung des in Eingriff befindlichen Dorns erfolgen und danach eine erneute Vorhubbewegung des Dorns, bei welcher der Dorn weiter in das Bauteil eindringt, bis der Dorn das Bauteil vollständig durchdrungen hat.

Finden zwei sich gegenüberliegende Dorne Anwendung, kann bei einer Rückhubbewegung eines Dorns eine Vorhubbewegung des gegenüberliegenden Dorns in das Bauteil erfolgen. Dies wird solange im Wechsel durchgeführt, bis das durchgehende Loch im Bauteil erzeugt ist.

Eine maximale Eindringtiefe des Dorns je Vorwärtshub wird dabei bevorzugt in Abhängigkeit vom Bauteil (Material und Dichte des Bauteils) sowie von einer Drehzahl des Dorns und/oder einer Vorschubgeschwindigkeit des Dorns festgelegt.

Nach Erreichen dieser festgelegten maximalen Eindringtiefe je Vorschubbewegung vollführt der Dorn einen Rückhub. Dadurch wird vermieden, dass das Bauteil durch die entstehende Reibung zu stark erwärmt wird.

Die entsprechenden Werte können einfach durch Referenzversuche ermittelt werden. Bevorzugt werden somit Drehzahl und/oder die Vorschubgeschwindigkeit und/oder die maximale Eindringtiefe empirisch ermittelt.

Dabei wird die maximale Eindringtiefe des jeweiligen Stempels je Hub so festgelegt, dass eine auf das Bauteil durch die Reibung des Stempels wirkende Temperatur maximal 200°C beträgt. (Eventuell auch mehr oder weniger, je nach Bauweilwerkstoff).

Das Werkzeug zur Durchführung des Verfahrens dient zur Erzeugung einer überwiegend radialen Verdichtung und ist in Form wenigstens eines Dorns mit einem zylindrischen oder polygonförmigem Schaft und einer sich in Richtung zum Bauteil im Durchmesser reduzierenden Spitze ausgebildet.

Dabei weist das Werkzeug zur Erzeugung einer überwiegend axialen Verdichtung in Richtung zum Bauteil eine platte / plane / konisch mit stumpfen Winkel Fläche auf und/oder erweitert sich vom Bauteil weg im Durchmesser.

Der Winkel des stumpf ausgeführten (temperaturbeaufschlagten o. kalten) Formwerkzeuges hat mindestens den Winkel des durch die Verdichtung des Bauteils maximal möglicher Dehnung der in dem Fall vor der Verdichtung ensprechenden Ankathete welcher nach der Verdichtung zur im Dreieck aufgespannten Hypotenuse wird. Diese Dehnung muss mindestens 1% betragen und somit ergibt sich der entsprechenden Winkel des Formwerkzeuges in Abhängigkeit der Dehnung.

Die Spitze des Dorns kann auch in Form einer Kegelspitze, eines Kegelstumpfes oder in einer anderen sich in Richtung zum Bauteil im Durchmesser reduzierenden Form ausgebildet sein.

An der dem Dorn gegenüberliegenden Seite des Bauteils kann ein Gegenhalter angeordnet sein und/oder der Dorn kann auch von einem Niederhalter umringt sein. Der Dorn ists mittels eines ersten Antriebes in Rotation versetzbar und mittels eines zweiten Antriebes in Richtung zur Längsachse des Dorns bewegbar wenn eine radiale Verdichtung erzeugt und ein Loch hergestellt werden soll.

Alternativ ist der Dorn nur mittels eines zweiten Antriebes in Richtung zur Längsachse des Dorns bewegbar ist, wenn nur eine axiale Verdichtung erzeugt werden soll.

Gemäß einer Variante der Erfindung kann der Dorn beheizt sein.

Bei einem unbeheizten rotierenden Stempel können auch durch Reibung hohe Temperaturen erreicht werden.

Das Werkzeug kann dabei einen Temperatursensor aufweisen.

Der axial bzw. radial wirkende Stempel kann auch unbeheizt (kalt) sein, wobei mit dem rotierenden Stempel durch die Reibung mit dem Bauteil auch passiv hohe Temperaturen erreicht werden.

Bei der Ausformung der axialen Verdichtung kann nach Erreichen der gewünschten Endform das Formwerkzeug (der Dorn) abgekühlt werden (wenn dieser beheizt ist) oder im heißen Zustand ausgeformt werden. Dabei kann die Abkühlung aktiv oder passiv erzeugt werden.

Die Erfindung betrifft die Ausbildung einer dauerhaft gleitfest vorgespannten Verbindungsstelle in einem Werkstoff der zumindest 50% aus nachwachsenden Rohstoffen besteht, mit metallischen Verbindungsmitteln, indem die Unterschiede in den mechanischen Eigenschaften zwischen dem Werkstoff und den metallischen Verbindungsmittel minimiert werden.

Der starke Abfall der Vorspannkraft von gleitfest vorgespannten metallischen Verbindungsmitteln, wie Schrauben durch auftretende Relaxations- und Retardationserscheinungen im Werkstoff eines Bauteils, wird erfindungsgemäß durch eine lokal definierte Erhöhung der Werkstoffrohdichte realisiert. Diese lokale Dichteerhöhung kann durch die erfindungsgemäße Lösung in Form der axialen und/oder radialen Verdichtung während der Halbzeugherstellung oder nachträglich durch entsprechende erfindungsgemäße Werkzeuge erzielt werden.

Verbindungsmittel zur Direktverschraubung z. B. selbstschneidende, gewindeformende Schrauben sind davon ausgenommen, weil diese keine dauerhafte gleitfest vorgespannte Verbindung ermöglichen.

Die Verbindungstelle wird gemäß des erfindungsgemäßen Verfahrens dabei über den kompletten Verbindungsquerschnitt so hoch verdichtet, dass eine dauerhafte gleitfest vorgespannte Schraubverbindung, ohne zusätzliches Verbindungsmittel und Nachspannen dessen realisiert wird. Diese Art Werkstoffverdichtung ist mit Verbindungsmittel bekannter Art im ein- oder zweistufigen Verfahren nicht möglich, weil die zulässige Vorspannkraft des Verbindungmittels dafür zu niedrig ist. Die Verformung des Werkstoffs, insbesondere des Holzwerkstoffes oder einem anderen nachwachsenden Rohstoff (z.B. Bambus oder einer Mischung verschiedener nachwachsender Rohstoffe) in der Verbindungstelle ist plastisch, sie wird im Herstellungsprozess mit pflanzeneigenen Bestandteilen Cellulose, Hemicellulose und Lignin über physikalisch-chemische Prozesse fixiert.

Lignine bilden eine Gruppe von phenolischen Makromolekülen, die sich aus verschiedenen Monomerbausteinen zusammensetzen. Es sind feste Biopolymere, die in die pflanzliche Zellwand eingelagert werden und dadurch die Verholzung der Zelle bewirken (Lignifizierung). Diese Einlagerungen findet man in den Zellwänden von verholzten Pflanzen wie Bambuspflanzen, Gräsern, Stauden, Sträuchern und Bäumen. Lignin hat als Stützmaterial und verhärtetes Polymer eine Reihe wichtiger Aufgaben für die Pflanze. Lignine sind wesentlich für die Festigkeit pflanzlicher Gewebe, vor allem für ihre Druckfestigkeit, während die eingelagerten Cellulosefasern die Zugfestigkeit gewährleisten. Reißfeste, biegsame Fasern (Cellulose) werden also von einem dichten und starren Polymer als Füllmaterial (Lignin) durchdrungen.

Erstmalig wird das im Bauteil enthaltene Lignin zur Erzeugung der lokalen Verdichtungsstellen im Bauteil genutzt, welche durch die Umformung des Bauteils im Bereich der erzeugten Löcher erzeugt werden. Durch das Lignin werden die Verdichtungsstellen stabilisiert, denn es reagiert ähnlich einem Thermoplast.

Durch die bei der Herstellung der Löcher mit dem Werkzeug auftretende Reibung wird der Werkstoff erwärmt, wodurch das Lignin plastifiziert wird und beim Abkühlen wieder aushärtet und dadurch dem umgeformten Bereich wieder stabilisiert.

Bei bzw. nach der Formgebung der Verbindungsstelle verbleibt weder das Formwerkzeug noch das Verbindungsmittel zur Ausformung der Verbindungstelle nach Abschluss des Formgebungsprozesses in Verwendung. Nachfolgend wir die hochbelastbare Verbindungsstelle inkl. Standardverbindungsmitteln (Maschinenbauschraube, Scheiben, Mutter) genutzt, um die dauerhafte gleitfest vorgespannte Verbindung umzusetzen.

Das erfindungsgemäße Bauteil weist zumindest eine lokale axial und /oder radiale erzeugte Verdichtungsstelle mit einem definiertem Lochdurchmesser auf, wodurch die an dem Bauteil erzeugte Schraubverbindung höheren Belastungen standhält und Setzerscheinungen und innerer Spannungsabbau im Bereich der Schraubverbindung aufgrund der lokalen Verdichtungsstellen im Vergleich zu herkömmlichen Verbindungen, bei welchen die Bauteile keine Verdichtungsstellen aufweisen, reduziert werden. Verfahrensgemäß werden die lokalen Verfestigungen in dem Bauteil mittels eines entsprechenden Werkzeuges, welches am Bauteil aus einer Richtung oder aus zwei sich gegenüberliegenden Richtungen angreift durchgeführt. Dies erfolgt mit mindestens einem rotierenden Dorn, welcher eine definierte werkstoffabhängige Kraft auf das Werkstück bewirkt. Dies erfolgt durch den Vorschub des Dorns in Abhängigkeit der Rotationsgeschwindigkeit und der an der Wirkstelle auftretenden Temperatur.

Als Werkstoffe finden insbesondere nachwachsende Rohstoffe Anwendung, wobei der Anteil an nachwachsenden Rohstoffen mindestens 50% betragen sollte. Bevorzugt finden Holzwerkstoffe Anwendung oder auch Holzwerkstoffe in Kombination mit einem Anteil an nachwachsenden Rohstoffen <50%.

Insbesondere besteht der Werkstoff der Bauteile aus vorwiegend nachwachsenden Rohstoffen wie Holzwerkstoffe, Graswerkstoffe (Bambus) oder aus hybridem Material wie Wood Plastic Composite (WPC) oder Holzwerkstoffe mit metallischen Lagen, Kunststofflagen, Papier- oder Papplagen als Deck- und/oder Zwischenschichten bzw. einer beliebigen Kombination der vorgenannten Materialien.

Werden Werkstoffe aus Holz eingesetzt, sind dies insbesondere Bauteile mit einem geschichteten Aufbau mit mindestens drei untereinander verbundenen Schichten. Derartige Bauteile werden als Lagenholz bezeichnet.

Bevorzugt besteht das Bauteil aus Lagenholz, insbesondere aus Sperrholz. Sperrholz ist die spezifiziertere Legeart der Furniere, wo sich die richtungsabhängigen Eigenschaften durch eine insbesondere 0°-90° Faserverlauforientierung in eine Sperrwirkung verstärken. Es sind jedoch auch andere Sperrhölzer mit Orientierungen welche vom 0°-90° abweichen, verwendbar.

Es können jedoch auch Bauteile aus Bambus oder mit Bambusanteil Anwendung finden, beziehungsweise generell nachwachsende Rohstoffe, die Lignin enthalten.

Die Bauteile sind insbesondere plattenförmig ausgebildet, können aber auch in anderer geometrischer Form vorliegen.

In Bezug auf die Oberfläche des Bauteils kann vorzugsweise ein Angriffswinkel des Werkstücks von 90° Anwendung finden, jedoch auch ein davon abweichender Winkel der Bearbeitungsrichtung, wie beispielsweise bis 45°.

Durch das Werkzeug wird ein nahezu zylindrisches Loch erzeugt, welches als Durchgangsloch ausgebildet ist oder auch einen Boden aufweisen kann. Der Bereich der lokalen Verfestigung in Abhängigkeit von dem erzeugten Durchmesser D des Lochs beträgt bevorzugt bei einer radialen Verdichtung bis zu des fünffachen des Durchmessers und bei einer axialen Verdichtung bis zu zwanzigfachen des Durchmessers.

D ist dabei der Formgebende Werkzeugdurchmesser. Der Bereich der Verdichtung ist größer und abhängig von D (ein Vielfache=20x), des lokalen Einflussbereiches eines erzeugten zylindrischen Loches. Die Prozesse spielen sich alle in dem definierten lokalen Bereich von bis zu zwanzigfachen des Durchmessers um das mit dem Stempel erzeugte Loch ab.

Es ist möglich, das Loch mit der dieses umgebenden Verdichtungsstelle ohne Vorbohren oder auch mit Vorbohren zu erzeugen.

Bei einem Verhältnis Durchmesser-Plattenstärke (bei einem plattenförmigen Bauteil) als Bereich ohne Vorbohren ist das Verhältnis bis 1:2 (Bsp.: 10mm Werkzeugdurchmesser, 20mm Plattenstärke). Bei einem Verhältnis ab 1:4 bis 10:1 Durchmesser D des zu erzeugenden Lochs zu Plattenstärke sollte ein durchmesserabhängiges Vorbohren erfolgen.

Der vorzubohrende Durchmesser sollte 0,1 bis 0,9 x D sein.

Der Temperaturbereich an der Stelle, an der das Werkstück wirkt, d.h. an der Wirkstelle sollte zwischen 0°C - 210°C, bevorzugt 100°C-150°C, besonders bevorzugt bei 140°C liegen. Insbesondere bei Temperaturen über 100°C wird das im Werkstoff enthaltene Lignin in Verbindung mit dem im Werkstoff wirkenden Umformdruck plastifiziert und verfestigt sich beim Abkühlen wieder.

Es ist möglich das Einbringen der Löcher mit oder ohne Gegenhalter zu realisieren. Ein Gegenhalter ist beispielsweise möglich bei einseitigem und zweiseitigen radialem Verdichtungsprozess, bei einseitigem oder zweiseitigem Eindrücken der Löcher und/oder kombinierter Verdichtung - axial und/oder radial.

Vorzugsweise wird das Verfahren ohne Niederhalter durchgeführt.

Es kann jedoch auf der Seite des Werkzeugs auch ein Niederhalter vorgesehen werden, der das Werkzeug umringt und auf die Oberfläche des Bauteils mit einer Niederhalterkraft wirkt.

Dies kann bei einem einseitigen Verdichtungsprozess der Fall sein, d.h. wenn nur ein Werkzeug zur Herstellung des Lochs Anwendung findet oder auch bei einem zweiseitigen radialen Verdichtungsprozess, d.h. wenn zwei sich gegenüberliegende Werkzeuge auf das Bauteil wirken, auf jeder Seite des plattenförmigen Bauteils ein Dorn.

Somit kann der Niederhalter beim Einseitigen/zweiseitigem Drücken und/oder kombinierter Verdichtung Anwendung finden.

Mit der erfindungsgemäßen Lösung werden bei Einbringen der für eine Schraubverbindung erforderlichen Löcher lokale Verfestigungen in dem Bauteil erzeugt, die eine höhere Belastbarkeit der Schraubverbindung gewährleisten.

Die Erfindung wird nachfolgend an einem Ausführungsbeispiel und zugehörigen Zeichnungen näher erläutert.

Es zeigen:
- Figur 1: die Prinzipdarstellung des Verfahrensablaufes beim einseitigen Durchdringen des Bauteils mit einem Dorn,
- Figur 2: die Prinzipdarstellung des Verfahrensablaufes beim zweiseitigen Durchdringen des Bauteils mit zwei sich gegenüberliegend angeordneten Dornen,
- Figur 3: die Prinzipdarstellung eines Bauteils mit einer erfindungsgemäßen radialen Verdichtung,
- Figur 4: die Prinzipdarstellung einer erfindungsgemäßen axialen Verdichtung über den kompletten Verbindungsquerschnitt des Bauteils,
- Figur 5: die Prinzipdarstellung der Erzeugung einer radialen und axialen Verdichtung unter Verwendung eines Gegenhalters,
- Figur 6: die Verschraubung von zwei Bauteilen 1 mit axialer und radialer Verdichtung.

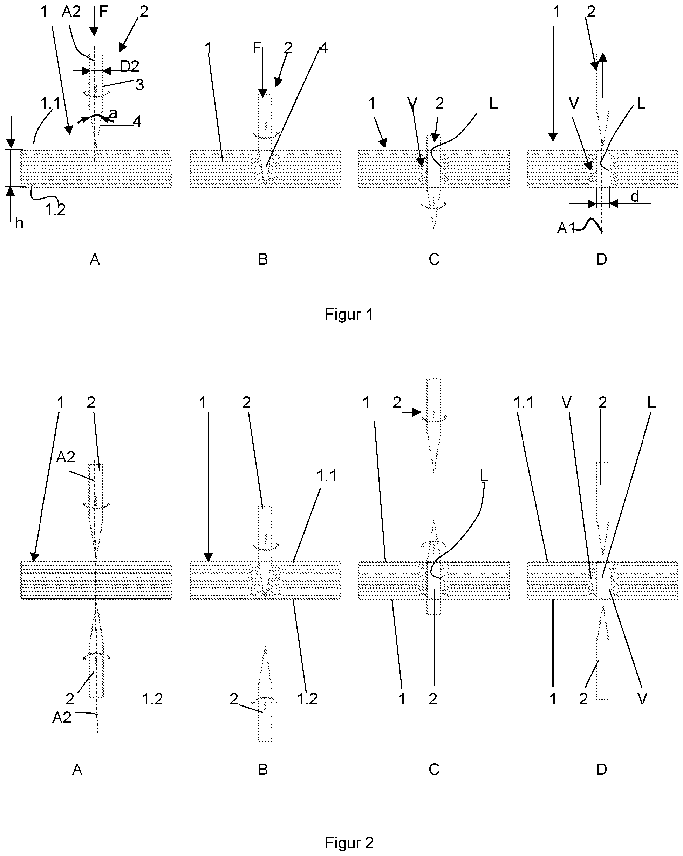

In Figur 1 ist die Prinzipdarstellung des Verfahrensablaufes beim einseitigen Durchdringen des Bauteils 1 mit einem Werkzeug, welches einen Dorn 2 aufweist bzw. als Dorn 2 ausgebildet ist, der eine Längsachse A2 aufweist, in den Schritten A bis D dargestellt. Das Bauteil 1 ist eine mehrfach geleimte Holzplatte (Lagenholz) mit einer ersten Seite 1.1 und einer zweiten Seite 1.2 und einer Höhe h. Der Dorn 2 weist einen zylindrischen Schaft 3 mit einem Durchmesser D2 auf, an welchen sich in Richtung zum Bauteil 1 eine Spitze 4 anschließt. Die Spitze 4 ist hier im Wesentlichen kegelförmig ausgebildet und weist einen Kegelwinkel a auf, der bevorzugt zwischen 15° und 20° liegt (der Winkel kann aber auch größer oder kleiner sein).

Bei dem Schritt A wird der rotierende Dorn 2 mit der Spitze 4 in Richtung zur Oberseite 1.1 des Bauteils 1 bewegt, sitzt hier auf der Seite 1.1 auf und wird nun im Vorhub mit einer Kraft F in das Bauteil 1 gedrückt, wobei gemäß Schritt B der Werkstoff des Bauteils 1 größtenteils radial verdrängt und partiell verdichtet wird. In Schritt C hat der Dorn 2 das Bauteil 1 durchdrungen und es hat sich ein Loch L im Bauteil 1 durch die Verdrängung des Werkstoffs ausgebildet. Um das Loch L wurden durch die Verdrängung des Werkstoffs des Bauteils 1 lokale radiale Verdichtungen V über die gesamte Höhe h des Bauteils 1 erzeugt. Anschließend wird der Dorn 2 in einem Rückhub vorzugsweise rotierend gemäß Schritt D in Pfeilrichtung aus dem Bauteil 1 entfernt. Das im Bauteil 1 erzeugte Loch L weist eine Längsachse A1 und einen Durchmesser d auf, wobei der Durchmesser d dem Durchmesser D2 des Dorns 2 entspricht. Die das Loch L umgebende lokale Verdichtung V bleibt nach dem Entfernen des Dorns 2 im Bauteil 1 bestehen, da diese durch das thermoplastisch reagierende Lignin im Umformbereich des Werkstoffs stabilisiert ist.

Es besteht auch die Möglichkeit, dass der Dorn 2 erst teilweise in das Bauteil 1 eindringt, wieder zurückgefahren wird und dann erneut tiefer in das Bauteil 1 eindringt und somit eine alternierende Vor- und Rückhubbewegung vollführt, bis der Dorn 2 das Bauteil 1 vollständig durchdrungen hat.

Figur 2 zeigt die Prinzipdarstellung des Verfahrensablaufes mit den Schritten A bis D beim zweiseitigen Durchdringen des Bauteils 1 mit zwei sich gegenüberliegend angeordneten Dornen 2, deren Längsachsen A2 fluchten und die abwechselnd von beiden Seiten 1.1, 1.2 immer mit einem Vorschub in das Bauteil 2 eindringen, bis das Loch L sich vollständig im Bauteil 1 ausgebildet hat (Schritt C). Gemäß Schritt A ist noch kein rotierender Dorn 2 in das Bauteil 1 eingedrungen. In Schritt B ist der hier obere Dorn 2 aus Richtung der Oberseite 1.1 des Bauteils 1 in dieses eingedrungen, hat es aber noch nicht durchdrungen. Der obere Dorn 2 ist gemäß Schritt C aus dem Bauteil 1 zurückgefahren und der untere Dorn 2 ist aus Richtung der Unterseite 1.2 des Bauteils 1 in dieses eingedrungen und hat dieses komplett durchdrungen und das Loch L erzeugt. Darauf wurde der untere Dorn 2 gemäß Schritt D ebenfalls außer Eingriff gebracht und das Verfahren ist beendet.

Bei den vorgenannten Beispielen wird der Dorn 2 im Wesentlichen rechtwinklig = Winkel 90° zur Oberseite 1.1 bzw. zur Unterseite 1.2 des Bauteils 1 eingebracht. Es besteht auch die Möglichkeit, den Dorn 2 in einem anderen Neigungswinkel in das Bauteil 1 einzuformen und dadurch ein Loch L zu erzeugen, dessen Längsachse A1 im Bauteilschräg verläuft.

Es besteht weiterhin die Möglichkeit, dass der Stempel von einem Niederhalter umringt ist, der während des Einformens des Loches auf die Ober oder Unterseite 1.1, 1.2 des Bauteils 1, je nachdem, aus welcher Richtung der Dorn 2 angreift, wirkt.

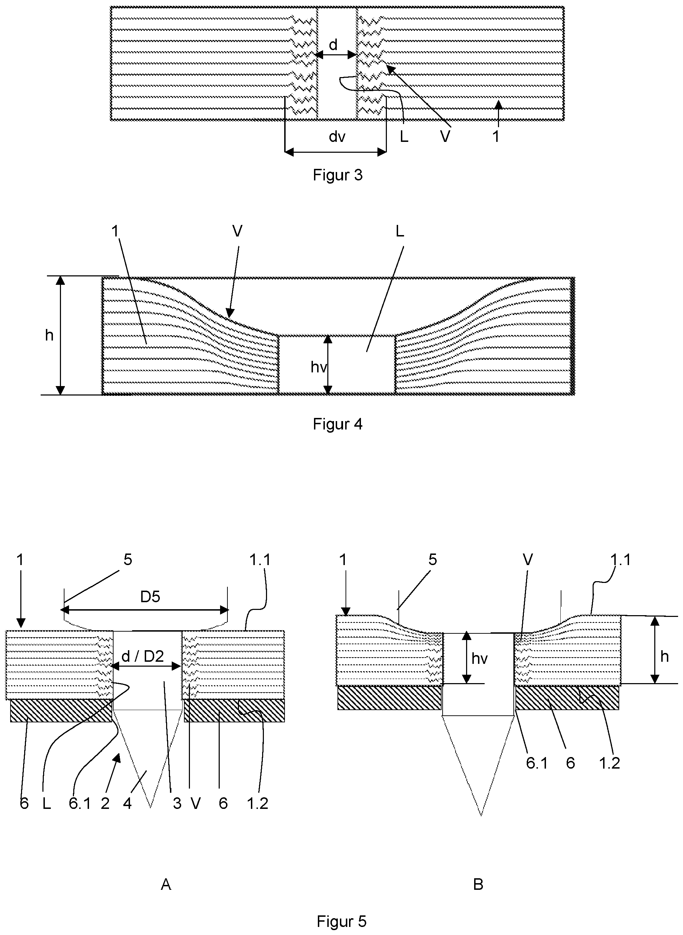

Die Prinzipdarstellung eines Bauteils 1 mit einer erfindungsgemäßen radialen Verdichtung V ist in Figur 3 dargestellt.

Es wurde hier im Bauteil 1 ohne Vorbohren ein Loch L mit einem Durchmesser d erzeugt. Die hier radiale Verdichtung V des Werkstoffs, welche sich an das Loch L umfangsseitig anschließt, weist umfangsseitig einen Durchmesser dv auf, der bis 5 x d beträgt. Im dargestellten Beispiel beträgt dv ca. 2 x d.

Gemäß Figur 4 ist es auch möglich, nur eine axiale Verdichtung V zu erzeugen, die über den kompletten Verbindungsquerschnitt des Bauteils 1 reicht.

Dabei wurde das Loch L durch Vorbohren hergestellt und anschließend der sich umfangsseitig an das Loch anschließende Bereich des Loches L durch einen nicht dargestellten axial wirkenden Stempel mit der axialen Verdichtung V versehen. Die Höhe hv des verdichteten Bereiches V im Bereich des Loches L beträgt hier ca. 0,5 x h.

Figur 5 zeigt eine Prinzipdarstellung der Erzeugung einer radialen und axialen Verdichtung V unter Verwendung eines Dorns 2, der eine Schulter 5 mit einem Durchmesser D5 aufweist, die sich an den Schaft 3 anschließt und eines Gegenhalters 6. Es wurde zuerst in Schritt A die radiale Verdichtung V mit dem Dorn 2 und dessen Spitze 4 erzeugt, indem der Dorn 2 aus Richtung der Oberseite 1.1 in das Bauteil 1 eindringt und dieses vollständig durchdrungen hat, so dass das Loch L mit dem Durchmesser d erzeugt wurde.

Bei einem weiteren Vorschub wird die Schulter 5 in das Bauteil 1 axial eingepresst (siehe Schritt B), so dass im Bauteil 1 zusätzlich zur radialen Verdichtung eine axiale Verdichtung V des Werkstoffs im Bauteil 1 aus Richtung der Oberseite 1.1 erzeugt wird, wobei sich die Höhe h des Bauteils 1 in dem Bereich der wirkenden Schulter 5 auf eine Höhe hv verringert.

An der Unterseite 1.2 des Bauteils 1 liegt bei beiden Stufen ein Gegenhalter 6 an, der eine Bohrung 6.1 aufweist, durch welche der Dorn 2 greifen kann.

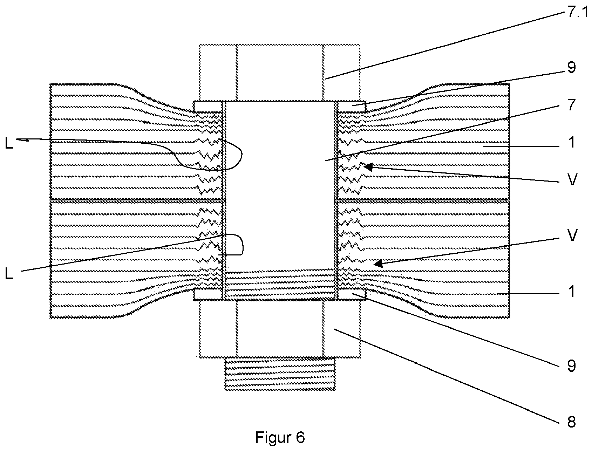

Eine Verschraubung mit axialer und radialer Verdichtung V ist in Figur 6 dargestellt. Zwei Bauteile 1 liegen mit ihren ebenen Unterseiten 1.2 aneinander an und sind über eine Schraube 7 und eine Mutter 8 miteinander verbunden, wobei die Schraube 7 durch die zueinander fluchtenden Löcher L der Bauteile 1 ragt. Unter dem Schraubenkopf 7.1 und unter der Mutter 8 ist jeweils eine Unterlegscheibe 9 vorgesehen.

Der verdichtete Bereich V in den beiden Bauteilen 1 ermöglicht eine höhere Vorspannung und reduziert die Setzerscheinungen bzw. Relaxation und Retadationserscheinungen.

### Bezugszeichenliste

- 1: Bauteil
- 1.1: Oberseite
- 1.2: Unterseite
- 2: Dorn
- 3: Schaft
- 4: Spitze
- 5: Schulter
- 6: Gegenhalter
- 7: Schraube
- 7.1: Schraubenkopf
- 8: Mutter
- 9: Unterlegscheibe

- a: Kegelwinkel der Spitze
- b: Eindringwinkel des Dorns
- d: Durchmesser des Lochs L
- dv: Umfang des verdichteten Bereiches
- h: Höhe des Bauteils 1
- hv: Höhe des verdichteten Bereiches
- A: Längsachse
- D2: Durchmesser des Dorns, der sich an die Spitze 4 anschließt
- D5: Durchmesser der Schulter 5
- F: Kraft
- L: Loch
- V: Verdichtung

## Patentansprüche

1. Bauteil aus einem Werkstoff, der überwiegend aus nachwachsenden Rohstoffen besteht,
- wobei das Bauteil (1)
• aus Lagenholz besteht
oder
• in Form einer Platte ausgebildet ist und mindestens drei Lagen mit nachwachsenden Rohstoffen aufweist, die mit weiteren Materialschichten kombiniert sind, wobei das Bauteil eine oder mehrere Materialschichten aus Metall, Kunststoff, Faserverbundmaterial, Papier oder Pappe oder einer Kombination dieser Materialschichten aufweist
und
- wobei das Bauteil wenigstens ein, zur Herstellung einer Verbindung mittels einer Verschraubung mit einem weiteren Bauteil dienendes, Loch (L) mit einer Längsachse (A1) aufweist um eine Verbindung mittels einer Verschraubung herzustellen
und
- wobei der Werkstoff des Bauteils (1) in dem sich an das Loch (L) umfangsseitig anschließenden Bereich eine durch das Eindringen eines rotierenden Dorns erzeugte, eine dauerhaft gleitfest vorgespannte Verbindungsstelle für die Verschraubung realisierende, lokale Verdichtung (V) aufweist, wobei das Loch (L) ein zylindrisches oder nahezu zylindrisches Loch ist (L) und als Durchgangsloch in dem Bauteil (1) ausgebildet ist oder einen Boden aufweist und wobei der sich an das Loch (L) umfangsseitig anschließende Bereich des Bauteils (1) radiale und/oder axiale lokale Verdichtungen (V) aufweist und wobei das Loch (L) einen Durchmesser (d) aufweist und
- der sich an das Loch (L) umfangsseitig anschließende Umfang (dv) des verdichteten Bereiches bis zum fünffachen des Durchmessers (d) beträgt und/oder dass die Höhe (hv) des verdichteten Bereiches bis zum zwanzigfachen des Durchmessers (d) beträgt und/oder im Vergleich zur Höhe (h) des Bauteils (1) reduziert ist.

2. Bauteil nach Anspruch 1, **dadurch gekennzeichnet, dass** das Loch (L) in einem Winkel (b) von 90° bis 45° zur Oberseite (1.1) des Bauteils (1) in das Bauteil (1) eingebracht ist.

3. Verfahren zum Herstellen eines Bauteils nach Anspruch 1, **dadurch gekennzeichnet, dass** mindestens ein Dorn (2) mit einem zylindrischen Schaft (3) und einer sich in Richtung zum Bauteil (1) im Durchmesser reduzierenden Spitze (4) in den Werkstoff des Bauteils (1) eindringt und dadurch ein Loch (L) im Bauteil (1) erzeugt und den Werkstoff radial und/oder axial verdrängt und dabei in dem das Loch (L) umgebenden Bereich des Werkstoffs eine lokale Verdichtung (V) erzeugt, wobei der Dorn (2) zumindest während des Eindringens in das Bauteil (1) rotiert.

4. Verfahren nach Anspruch 3, **dadurch gekennzeichnet, dass** zwei sich gegenüberliegende Dorne (2) Anwendung finden, die wechselseitig aus sich gegenüberliegenden Richtungen in das Bauteil (1) eindringen und das Loch (L) mit dem Durchmesser (d) erzeugen und dabei den Werkstoff verdrängen und in dem das Loch (L) umgebenden Bereich verdichten, wobei beide Dorne (2) zumindest während des Eindringens in das Bauteil (1) rotieren.

5. Verfahren nach Anspruch 3 oder 4, **dadurch gekennzeichnet, dass** eine Rückhubbewegung des in Eingriff befindlichen Dorns (2) erfolgt und danach eine erneute Vorhubbewegung des Dorns (2), bei welcher der Dorn (2) weiter in das Bauteil (1) eindringt und/oder dass bei einer Rückhubbewegung eines Dorns (2) eine Vorhubbewegung eines gegenüberliegenden Dorns (2) in das Bauteil (1) erfolgt.

6. Verfahren nach einem der Ansprüche 3 bis 5, **dadurch gekennzeichnet, dass** eine maximale Eindringtiefe des Dorns (2) in Abhängigkeit
- vom Bauteil (1) sowie
- von einer Drehzahl des Dorns (2) und/oder
- einer Vorschubgeschwindigkeit des Dorns (2)
festgelegt wird und dass der Dorn (2) nach Erreichen der Eindringtiefe einen Rückhub vollführt.

7. Verfahren nach Anspruch 6, **dadurch gekennzeichnet, dass** die Drehzahl und/oder die Vorschubgeschwindigkeit und/oder die maximale Eindringtiefe empirisch ermittelt werden.

8. Verfahren nach Anspruch 6 oder 7, **dadurch gekennzeichnet, dass** die maximale Eindringtiefe so festgelegt wird, dass eine auf das Bauteil (1) durch die Reibung des Stempels wirkende Temperatur maximal 210°C beträgt.

9. Verwendung eines Werkzeuges in Form eines Dorns (2) mit einem zylindrischen Schaft (3) und einer Spitze (4) in einem Verfahren nach Anspruch 3.

10. Verwendung eines Werkzeuges nach Anspruch 9, **dadurch gekennzeichnet, dass** die Spitze (4) in Form einer Kegelspitze, eines Kegelstumpfes oder in einer anderen sich in Richtung zum Bauteil (1) im Durchmesser reduzierenden Form ausgebildet ist und das Werkzeug mittels eines ersten Antriebes in Rotation versetzbar und mittels eines zweiten Antriebes in Richtung zur Längsachse des Dorns (2) bewegbar ist.

11. Verwendung eines Werkzeuges nach Anspruch 9 oder 10, **dadurch gekennzeichnet, dass** der Dorn (2) beheizt ist und dass das Werkzeug bedarfsweise einen Temperatursensor aufweist.

## Claims

1. Component made of a material which consists predominantly of renewable raw materials,
- wherein the component (1)
• consists of plywood
or
• is in the form of a panel and has at least three layers of renewable raw materials which are combined with further layers of material, wherein the component has one or more layers of material made of metal, plastic, fiber composite material, paper or cardboard or a combination of these layers of material,
and
- wherein the component has at least one hole (L) with a longitudinal axis (A1) serving to produce a connection by means of a screw connection with a further component in order to produce a connection by means of a screw connection
and
- wherein the material of the component (1) in the region adjoining the hole (L) on the circumferential side has a local compaction (V) which is produced by the penetration of a rotating mandrel and realizes a permanently slip-resistant pretensioned connection point for the screw connection, wherein the hole (L) is a cylindrical or almost cylindrical hole (L) and is formed as a through-hole in the component (1) or has a bottom, and wherein the region of the component (1) adjoining the hole (L) on the circumferential side has radial and/or axial local compactions (V) and wherein the hole (L) has a diameter (d) and
- the circumference (dv) of the compacted region adjoining the hole (L) on the circumferential side is up to five times the diameter (d) and/or that the height (hv) of the compacted region is up to twenty times the diameter (d) and/or is reduced in comparison to the height (h) of the component (1).

2. Component according to claim 1, **characterized in that** the hole (L) is introduced into the component (1) at an angle (b) of 90° to 45° to the upper side (1.1) of the component (1).

3. Method for producing a component according to claim 1, **characterized in that** at least one mandrel (2) with a cylindrical shank (3) and a tip (4) which reduces in diameter in the direction of the component (1) penetrates into the material of the component (1) and thereby produces a hole (L) in the component (1) and displaces the material radially and/or axially, thereby producing a local compaction (V) in the region of the material surrounding the hole (L), wherein the mandrel (2) rotates at least during penetration into the component (1).

4. Method according to claim 3, **characterized in that** two mutually opposing mandrels (2) are used, which penetrate alternately into the component (1) from opposite directions and produce the hole (L) with the diameter (d), thereby displacing the material and compacting it in the region surrounding the hole (L), wherein both mandrels (2) rotate at least during penetration into the component (1).

5. Method according to claim 3 or 4, **characterized in that** a return stroke movement of the engaged mandrel (2) takes place and then a renewed forward stroke movement of the mandrel (2), during which the mandrel (2) penetrates further into the component (1) and/or in that, during a return stroke movement of a mandrel (2), a forward stroke movement of an opposite mandrel (2) into the component (1) takes place.

6. Method according to one of claims 3 to 5, **characterized in that** a maximum penetration depth of the mandrel (2) is determined as a function of
- the component (1) and
- a rotational speed of the mandrel (2) and/or
- a feed speed of the mandrel (2),
and **in that** the mandrel (2) performs a return stroke after reaching the penetration depth.

7. Method according to claim 6, **characterized in that** the rotational speed and/or the feed speed and/or the maximum penetration depth are determined empirically.

8. Method according to claim 6 or 7, **characterized in that** the maximum penetration depth is determined in such a way that a temperature acting on the component (1) due to the friction of the punch is at most 210°C.

9. Use of a tool in the form of a mandrel (2) having a cylindrical shank (3) and a tip (4) in a method according to claim 3.

10. Use of a tool according to claim 9, **characterized in that** the tip (4) is designed in the form of a conical tip, a truncated cone or in another form which reduces in diameter in the direction of the component (1) and the tool can be set in rotation by means of a first drive and can be moved in the direction of the longitudinal axis of the mandrel (2) by means of a second drive.

11. Use of a tool according to claim 9 or 10, **characterized in that** the mandrel (2) is heated and **in that** the tool has a temperature sensor if required.

## Revendications

1. Élément de construction fait d'un matériau composé en majorité de matières premières renouvelables,
- lequel élément de construction (1)
• se compose de bois stratifié ou
• est conformé comme un panneau et présente au moins trois couches contenant des matières premières renouvelables qui sont combinées à d'autres couches de matériau, l'élément de construction comportant une ou plusieurs couches de matériau faites de métal, de plastique, de composite armé de fibres, de papier ou de carton ou d'une combinaison de ces couches de matériau
et
- l'élément de construction comportant au moins un trou (L) avec un axe longitudinal (A1), servant à créer un assemblage au moyen d'un vissage avec un autre élément de construction, en vue d'un assemblage au moyen d'un vissage,
et
- le matériau de l'élément de construction (1) comportant, dans la zone qui fait suite au trou (L) sur la circonférence, une zone localement compactée (V) produite par la pénétration d'un mandrin en rotation, qui réalise un point d'assemblage précontraint et durablement résistant au glissement pour le vissage, le trou (L) étant un trou (L) cylindrique ou presque cylindrique et étant conformé comme un trou traversant dans l'élément de construction (1) ou comportant un fond et
la zone de l'élément de construction (1) faisant suite au trou (L) sur la circonférence comportant des zones localement compactées (V) radiales et/ou axiales et le trou (L) ayant un diamètre (d) et
- la circonférence (dv) de la zone compactée qui fait suite au trou (L) sur la circonférence représentant jusqu'à cinq fois le diamètre (d) et/ou
la hauteur (hv) de la zone compactée représentant jusqu'à vingt fois le diamètre (d) et/ou étant réduite par rapport à la hauteur (h) de l'élément de construction (1).

2. Élément de construction selon la revendication 1, **caractérisé en ce que** le trou (L) est formé dans l'élément de construction (1) selon un angle (b) de 90° à 45° par rapport à la face supérieure (1.1) de l'élément de construction (1).

3. Procédé pour la fabrication d'un élément de construction selon la revendication 1, **caractérisé en ce qu'**au moins un mandrin (2) ayant un corps (3) cylindrique et une pointe (4) dont le diamètre diminue en direction de l'élément de construction (1) pénètre dans le matériau de l'élément de construction (1) et forme ainsi un trou (L) dans l'élément de construction (1) et refoule le matériau dans le sens radial et/ou axial et produit ainsi la zone localement compactée (V) dans la zone du matériau entourant le trou (L), le mandrin (2) effectuant une rotation au moins pendant la pénétration dans l'élément de construction (1).

4. Procédé selon la revendication 3, **caractérisé en ce que** deux mandrins (2) se faisant face sont utilisés, qui pénètrent alternativement dans l'élément de construction (1) depuis des directions opposées et forment le trou (L) de diamètre (d) en refoulant le matériau et en le compactant dans la zone qui entoure le trou (L), les deux mandrins (2) effectuant une rotation au moins pendant la pénétration dans l'élément de construction (1).

5. Procédé selon la revendication 3 ou 4, **caractérisé en ce que** le mandrin (2) engagé effectue un mouvement de retour, puis le mandrin (2) effectue une nouvelle avance lors de laquelle le mandrin (2) pénètre plus loin dans l'élément de construction (1) et/ou **en ce que**, lors d'un mouvement de retour d'un mandrin (2), un mandrin (2) situé à l'opposé avance dans l'élément de construction (1).

6. Procédé selon l'une des revendications 3 à 5, **caractérisé en ce qu'**une profondeur maximale de pénétration du mandrin (2) est fixée en fonction
- de l'élément de construction (1) ainsi que
- d'une vitesse de rotation du mandrin (2) et/ou
- d'une vitesse d'avance du mandrin (2)
et **en ce que** le mandrin (2) effectue une course de retour après avoir atteint la profondeur de pénétration.

7. Procédé selon la revendication 6, **caractérisé en ce que** la vitesse de rotation et/ou la vitesse d'avance et/ou la profondeur de pénétration maximale sont déterminées de façon empirique.

8. Procédé selon la revendication 6 ou 7, **caractérisé en ce que** la profondeur de pénétration maximale est choisie de telle façon qu'une température produite par la friction du poinçon agissant sur l'élément de construction (1) s'élève à 210 °C au maximum.

9. Utilisation d'un outil prenant la forme d'un mandrin (2) avec un corps cylindrique (3) et une pointe (4) dans un procédé selon la revendication 3.

10. Utilisation d'un outil selon la revendication 9, **caractérisée en ce que** la pointe (4) est conformée comme une pointe conique, un tronc de cône ou une autre forme dont le diamètre diminue en direction de l'élément de construction (1) et l'outil peut être entraîné en rotation au moyen d'un premier entraînement et déplacé dans le sens de l'axe longitudinal du mandrin (2) au moyen d'un deuxième entraînement.

11. Utilisation d'un outil selon la revendication 9 ou 10, **caractérisé en ce que** le mandrin (2) est chauffé et **en ce que** l'outil comporte, si nécessaire, une sonde de température.
